# EUROPÄISCHE PATENTSCHRIFT

(11) **EP 1 214 219 B1**
(45) Veröffentlichungstag und Bekanntmachung des Hinweises auf die Patenterteilung: **03.11.2004**
(21) Anmeldenummer: 00954627.6
(22) Anmeldetag: 14.08.2000
(51) Int. Cl.: B60K 37/06, G06K 11/18

(54) **Lenkrad mit MULTIFUNKTIONS-BEDIENELEMENT**
Steering wheel with MULTIFUNCTION OPERATING ELEMENT
Volant avec ELEMENT DE REGLAGE POLYVALENT

(30) Priorität: 03.09.1999 DE 19941960
(43) Veröffentlichungstag der Anmeldung: 19.06.2002
(73) Patentinhaber: Volkswagen Aktiengesellschaft, 38436 Wolfsburg (DE)
(72) Erfinder: HEIMERMANN, Matthias, 38302 Wolfenbüttel (DE); DIRKSEN, Susanne, 38440 Wolfsburg (DE); LILIENTHAL, Jörg, 38518 Gifhorn (DE)
(74) Vertreter: Zucker, Volker, Dipl.-Ing.
(86) Internationale Anmeldenummer: PCT/EP2000/007912
(87) Internationale Veröffentlichungsnummer: WO 2001/017814

(56) Entgegenhaltungen:
- EP-A- 0 669 715
- EP-A- 0 796 756
- EP-A- 0 901 262
- EP-B- 0 366 132
- DE-A- 19 604 351
- US-A- 5 086 510
- US-A- 5 825 353

## Beschreibung

Die Erfindung betrifft ein Lenkrad mit Multifunktions-Bedienelement gemäß dem Oberbegriff des Patentanspruchs 1.

Moderne Komfortgeräte bieten immer mehr Funktionen mit immer mehr Optionen an. Da im Regelfall der Bauraum für die dazugehörigen Bedienelemente begrenzt ist, sind Multifunktions-Bedienelemente geschaffen worden, mittels derer verschiedene Funktionen bedienbar sind.

Aus der EP 0 366 132 B1 ist eine Multifunktions-Bedieneinrichtung für Kraftfahrzeuge bekannt, bei der die Auswahl von Funktionsgruppen (Menüs) und die Auswahl individueller Funktionen mittels Drehschaltem erfolgt und bei der eine Enter-Funktion auslösbar ist, wobei ein und derselbe bidirektionale Drehschalter zur Menü-Auswahl und individuellen Funktionsauswahl dient, der Raststellungen aufweist, denen Menüs oder einzelne Funktionen zugeordnet sind, wobei die Enter-Funktion durch eine Axialbewegung des Drehschalters auslösbar ist. Beispielsweise dient die Multifunktions-Bedieneinrichtung zur Zieleingabe eines Navigationssystems. Hierzu wird auf einer Anzeigeeinheit eine alphanumerische Tastatur abgebildet, in der sich der Nutzer mittels der bidirektionalen Bewegung des Drehschalters vor- und zurückbewegen kann. Steht dann der Cursor auf dem gewünschten alphanumerischen Zeichen, so kann dies durch eine Axialbewegung des Drehschalters ausgewählt und in das Navigationssystem übernommen werden. Nachteilig an dem bekannten Bedienelement ist, daß insbesondere bei größeren Bewegungen des Cursors häufig am Drehschalter umgegriffen werden muß.

Der Erfindung liegt daher das technische Problem zugrunde, ein Multifunktions-Bedienelement zu schaffen, das sich handhabungsfreundlicher bedienen läßt.

Die Lösung des technischen Problems ergibt sich durch den Gegenstand mit den Merkmalen des Patentanspruchs 1. Weitere vorteilhafte Ausgestaltungen ergeben sich aus den Unteransprüchen.

Durch die Ausbildung des Bedienelementes als bidirektional um seine Längsachse rotierbaren Zylinder, der federnd senkrecht zur Längsachse bewegbar ist, kann mittels Herübergleiten über einen Teil der Mantelfläche mit einer Bewegung der Hand eines Nutzers eine größere Bewegung des Cursors oder eines anderen Auswahlelementes durchgeführt werden.

Dabei ist das Multifunktions-Bedienelement in das Lenkrad eines Kraftfahrzeuges integriert. Der besondere Vorteil des zylinderischen Bedienelementes ist, daß, im Gegensatz zu einem Drehknopf, das Bedienelement nur sehr gering erhaben ausgebildet sein muß, um über den überstehenden Teil der Mantelfläche den Zylinder zu rotieren. Dadurch läßt sich das Bedienelement nicht störend und ästhetisch angepaßt außerhalb des eigentlichen Bediengerätes integrieren. Dies hat wiederum den Vorteil, daß beispielsweise bei Kraftfahrzeuganwendungen der Kraftfahrzeugführer nicht die Hand vom Lenkrad nehmen muß, um Eingaben zu tätigen.

Dabei ist das Bedienelement in der bidirektionalen Rotationsrichtung mit Raststellungen ausgebildet, wodurch ein definiertes Bewegen zwischen einzelnen Funktions- oder Auswahlfeldem möglich ist. Da jedoch die Raststellungen der Rotationsbewegung einen gewissen Widerstand entgegensetzen. sind die Raststellungen wahlweise zu- oder abschaltbar ausgebildet. Ebenfalls ist die Anzahl der Raststellungen in Abhängigkeit von dem aktuell eingestellten Funktionsmenü einstellbar ausgestaltet. Des weiteren kann deren Rastwiderstand in Abhängigkeit von dem eingestellten Funktionsmenü ausgestaltet sein.

Der Zylinder kann dabei einen kreisförmigen oder einen symmetrischen polygonalen Querschnitt aufweisen. Bei der Ausbildung mit symmetrischem polygonalen Querschnitt bilden die Verbindungslinien der Ecken des Polygons entlang der Längsachse des Zylinders eine griffigere Oberfläche, was die Rotationsbewegung vereinfacht. Selbstverständlich kann auch der kreisförmige Zylinder an seiner Oberfläche strukturiert werden, um einen besseren Kontakt zwischen der Hand des Nutzers und dem Bedienelement zu schaffen.

Die Erfindung wird nachfolgend anhand eines bevorzugten Ausführungsbeispieles näher erläutert. Die Fig. zeigen:

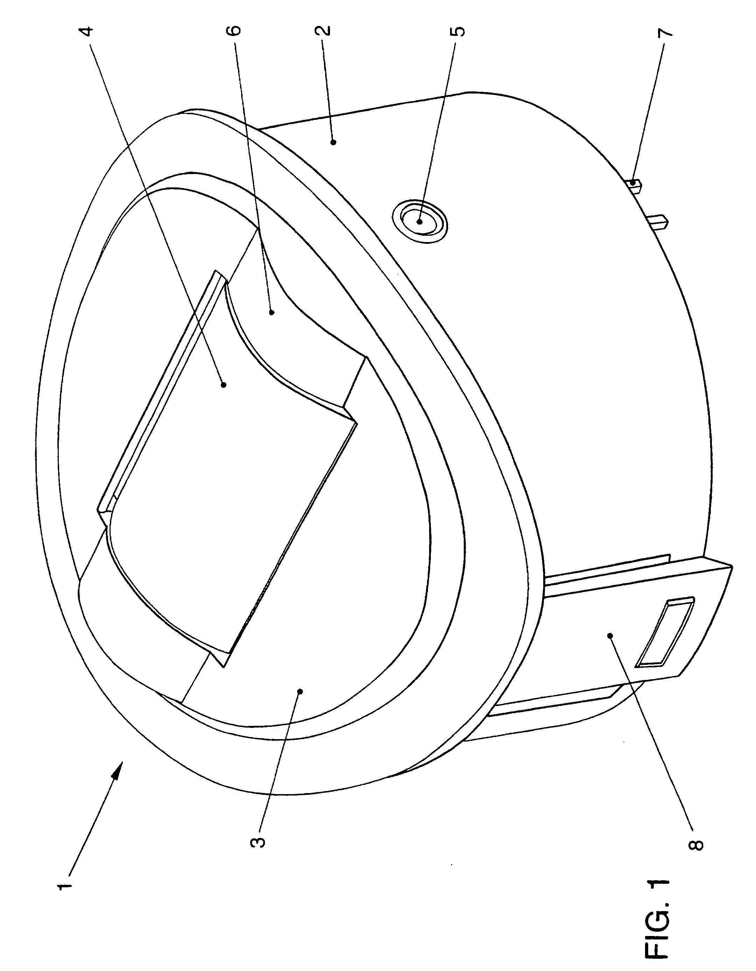

- Fig. 1: eine perspektivische Darstellung des Multifunktions-Bedienelementes mit Gehäuse und
- Fig. 2: eine perspektivische Darstellung des in einem Lenkrad integrierten Multifunktions-Bedienelementes.

Das Multifunktions-Bedienelement 1 umfaßt ein Gehäuse 2, eine Abdeckung 3 und einen Zylinder 4. Der Zylinder ist mit einer zentrisch angeordneten Rotationsachse 5 ausgebildet, die bidirektional drehbar in dem Gehäuse 2 gelagert ist, wozu das Gehäuse 2 mit entsprechenden Ausnehmungen oder Bohrungen ausgebildet ist. Die Abdeckung 3 weist mittig eine rechteckförmige Öffnung auf, aus der ein Teil des Zylinders 4 ragt. Seitlich von den Stirnflächen des Zylinders 4 ist die Abdeckung 3 mit konvexen Erhebungen 6 ausgebildet, die bündig mit dem aus der Öffnung herausragenden Teil des Zylinders 4 abschließen. Des weiteren ist der Zylinder 3 federnd zur Längs- bzw. Rotationsachse 5 bewegbar. Diese Bewegung senkrecht zur Rotationsachse 5 realisiert die Enter-Funktion. In dem Gehäuse ist darüber hinaus eine Vorrichtung zur Transformation der mechanischen Stellsignale in elektrische Stellsignale angeordnet, die ähnlich einer Computer-Maus ausgebildet ist. Über elektrische Kontakte 7 werden dann die elektrischen Stellsignale einem Prozessor zugeführt, der dann die entsprechend der Bewegung des Zylinders ausgewählten Funktionen ausführt und entsprechend den Bildaufbau einer zugehörigen Anzeigeeinheit anpaßt. Des weiteren ist das Gehäuse 3 mit mindestens einer Rastfläche 8 ausgebildet, die dann beim Einbau beispielsweise in ein Lenkrad mit korrespondierenden Rastaufnehmungen einrasten.

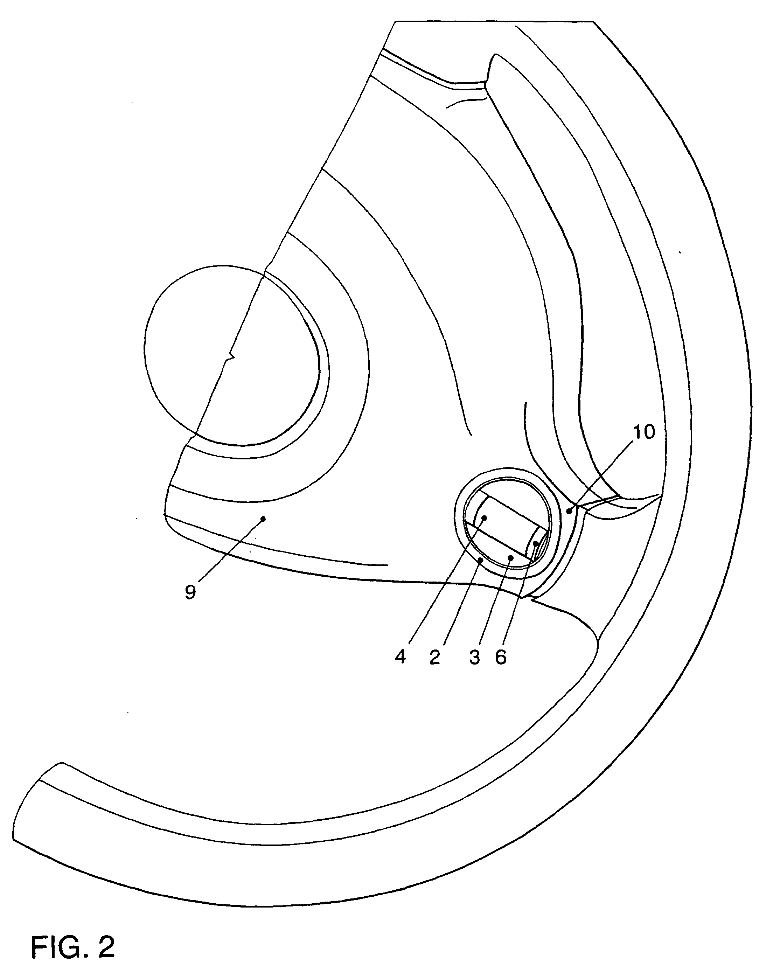

In der Fig. 2 ist das Multifunktions-Bedienelement 1 im eingebauten Zustand in einem teilweise dargestellten Lenkrad 9 gezeigt. Das Multifunktions-Bedienelement 1 wird dabei vorzugsweise im Bereich der Speiche 10 angeordnet, so daß der Kraftfahrzeugführer den Zylinder 4 drehen bzw. senkrecht zur Rotationsachse 5 drücken kann, ohne die Hände vom Lenkrad zu nehmen. Da die Lenkräder in modemen Kraftfahrzeugen meist ohnehin starke Rundungen aufweisen, paßt sich das Multifunktions-Bedienelement 1 auch gut in den optischen Gesamteindruck ein. Vorzugsweise lassen sich mit dem Multifunktions-Bedienelement 1 insbesondere Navigtionssysteme, Autotelefone, Audio-Video-Geräte, Heiz- und Klimaanlagen und/ oder ein Bordrechner bedienen.

## Patentansprüche

1. Lenkrad eines Kraftfahrzeuges, umfassend ein Multifunktions-Bedienelement zur Auswahl von Funktionsgruppen und individueller Funktionen, das mindestens zwei Bewegungsfreiheitsgrade aufweist, wobei mindestens die Bewegung entlang des ersten Freiheitsgrades bidirektional ausgebildet ist, über die eine Auswahl vomehmbar ist, wobei durch eine Bewegung entlang des zweiten Freiheitsgrades eine Enter-Funktion auslösbar ist, wobei das Bedienelement (1) als bidirektional um seine Längsachse rotierbarer Zylinder (4), der federnd senkrecht zur Längsachse (5) bewegbar ist, ausgebildet ist, wobei das Multifunktions-Bedienelement (1) mit Raststellungen ausgebildet ist, wobei die Anzahl der Raststellungen in Abhängigkeit von der zu bedienenden Funktion veränderbar ist.

2. Lenkrad nach Anspruch 1, **dadurch gekennzeichnet, dass** der Zylinder (4) einen kreisförmigen oder einen symmetrischen polygonalen Querschnitt aufweist.

3. Lenkrad nach Anspruch 1 oder 2, **dadurch gekennzeichnet, dass** der Rastwiderstand in Abhängigkeit von der zu bedienenden Funktion veränderbar ist.

## Claims

1. Steering wheel of a motor vehicle, comprising a multifunction operator control element for selecting function groups and individual functions, which has at least two degrees of freedom of movement, at least the movement along the first degree of freedom being of bidirectional configuration and permitting a selection to be made, it being possible to trigger an enter function by means of a movement along the second degree of freedom, the operator control element (1) being embodied as a cylinder (4) which can rotate bidirectionally about its longitudinal axis and which can move in a sprung fashion perpendicularly to the longitudinal axis (5), the multifunction operator control element (1) being embodied with latching positions, and the number of latching positions can be varied depending on the function to be controlled.

2. Steering wheel according to Claim 1, **characterized in that** the cylinder (4) has a circular or a symmetrical polygonal cross-section.

3. Steering wheel according to Claim 1 or 2, **characterized in that** the latching resistance can be varied depending on the function to be controlled.

## Revendications

1. Volant de véhicule automobile, qui comporte un élément d'actionnement multifonctions qui permet de sélectionner des groupes de fonctions et des fonctions individuelles et qui présente au moins deux degrés de liberté de déplacement, au moins le déplacement selon le premier degré de liberté étant bidirectionnel et permettant une sélection, un déplacement selon le deuxième degré de liberté permettant de déclencher une fonction d'introduction, l'élément d'actionnement (1) étant configuré comme cylindre (4) apte à tourner dans les deux sens autour de son axe longitudinal, et apte à se déplacer de façon élastique perpendiculairement à l'axe longitudinale (5) l'élément d'actionnement multifonctions (1) étant configuré avec des positions d'encliquetage dont le nombre peut être modifié selon la fonction à activer.

2. Volant selon la revendication 1, **caractérisé en ce que** le cylindre (4) a une section transversale circulaire ou en polygone symétrique.

3. Volant selon les revendications 1 ou 2, **caractérisé en ce que** la résistance à l'encliquetage peut être modifiée selon la fonction à activer.
